# EUROPÄISCHE PATENTSCHRIFT

(11) **EP 3 046 819 B1**
(45) Veröffentlichungstag und Bekanntmachung des Hinweises auf die Patenterteilung: **30.10.2019**
(21) Anmeldenummer: 14844968.9
(22) Anmeldetag: 17.09.2014
(51) Int. Cl.: B61B 12/10

(54) **ANTRIEBSANORDNUNG FÜR EINE SEILFÖRDERANLAGE**
DRIVE ARRANGEMENT FOR A CABLEWAY SYSTEM
SYSTÈME D'ENTRAÎNEMENT D'UN TRANSPORTEUR PAR CÂBLE

(30) Priorität: 20.09.2013 AT 7262013
(43) Veröffentlichungstag der Anmeldung: 27.07.2016
(73) Patentinhaber: Wopfner, Kurt, 6063 Rum (AT)
(72) Erfinder: Wopfner, Kurt, 6063 Rum (AT)
(74) Vertreter: Torggler & Hofinger Patentanwälte
(86) Internationale Anmeldenummer: PCT/AT2014/000171
(87) Internationale Veröffentlichungsnummer: WO 2015/039150

(56) Entgegenhaltungen:
- DE-A1- 4 025 736
- DE-U1-202007 003 043

## Beschreibung

Die vorliegende Erfindung betrifft eine Antriebsanordnung für eine Seilförderanlage mit den Merkmalen des Oberbegriffs des Anspruchs 1 und eine Seilförderanlage mit einer solchen Antriebsanordnung.

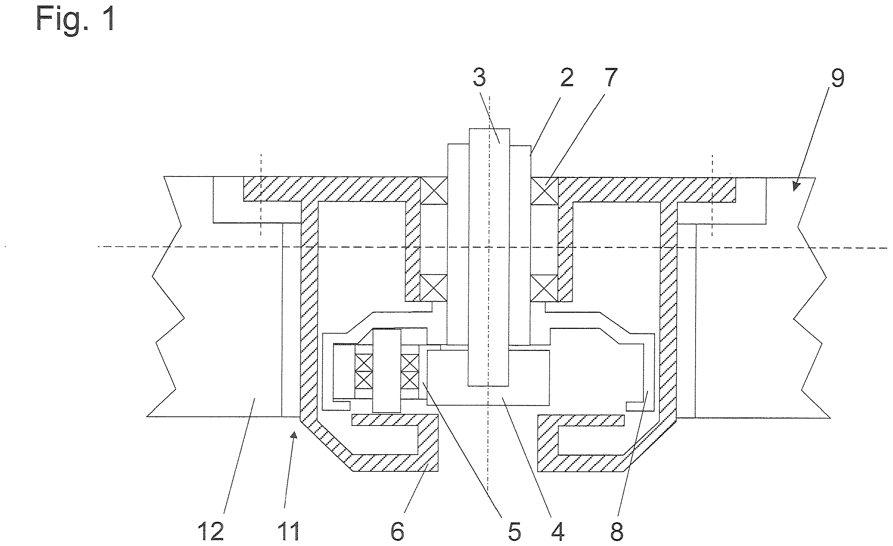

Eine derartige Antriebsanordnung ist branchenbekannt und wird nachstehend anhand der Figur 1 näher beschrieben.

Diese branchenbekannte Lösung weist verschiedene Nachteile auf:
- Im Betrieb der Antriebsanordnung erfolgt die Einleitung der Seilzugkräfte von der Seilscheibe in den Tragrahmen über eine einen Teil des Tragrahmens bildende Hohlachse, wodurch das Ausmaß der in den Tragrahmen sicher einleitbaren Seilzugkräfte in der Praxis begrenzt war.
- Die branchenbekannte Lösung baut sehr hoch.
- Die Seilscheibe ist über ein Seilscheibenlager mit sehr geringem Radius an einer zentralen Abtriebswelle gelagert. Dadurch kommt es zu einer ungünstigen Einleitung der Lagerkräfte.
- Der Kraftfluss der über die Abtriebswelle ausgeübten Antriebskraft verläuft über einen großen Teil axial über den Planetenträger, was mit einem größeren Materialeinsatz verbunden ist.

Zum technischen Umfeld wird beispielsweise auf die DE 4025736 A1 verwiesen. Aufgabe der Erfindung ist die Bereitstellung einer Antriebsanordnung, welche unter Verwendung eines mechanischen Untersetzungsgetriebes zumindest eine gegenüber dem Stand der Technik verbesserte Lagerung der Seilscheibe aufweist und die Bereitstellung einer Seilförderanlage mit einer solchen Antriebsanordnung.

Diese Aufgabe wird durch eine Antriebsanordnung mit den Merkmalen des Anspruchs 1 und eine Seilförderanlage mit den Merkmalen des Anspruchs 14 gelöst.

Bei der Erfindung ist der Radius des wenigstens einen Ringlagers, über welches die Seilscheibe direkt oder indirekt am Tragrahmen gelagert ist, größer als der radiale Abstand der Lagerung der Planetenräder von der Drehachse.

Durch diese Maßnahme ergibt sich im Vergleich zum Stand der Technik ein großer Durchmesser der Lagerung der Seilscheibe und damit - wegen des größeren Umfangs - eine geringe spezifische Pressung der Wälzkörper des Ringlagers. Außerdem sind durch die erfindungsgemäße Maßnahme größere Planetenräder verwendbar, wodurch sich eine größere Übersetzung (Verhältnis von Sonnenrad zu Hohlrad) ergibt.

Vorteilhafte Ausführungsformen der Erfindung sind in den abhängigen Ansprüchen definiert. Unter "rahmenfest" wird im Folgenden stets "fest mit dem Tragrahmen verbunden" verstanden, wobei der Tragrahmen entweder fest mit Stationskonstruktion verbunden sein kann (fixer Antrieb) als auch zum Zweck der Aufbringung der Seilspannung beweglich in der Stationskonstruktion eingebaut sein kann (gespannter Antrieb).

Bei der Erfindung sollten mindestens zwei, vorzugsweise mindestens drei Planetenräder vorgesehen sein.

Das Vorsehen einer zentralen Scheibenöffnung mit einem Öffnungsdurchmesser, der der Mindestgröße eines verwendbaren Hohlrades entspricht (zum Beispiel mindestens ein Drittel des Durchmessers der Seilscheibe beträgt), gestattet es, das Planetengetriebe zumindest teilweise, vorzugsweise zumindest im Wesentlichen vollständig in der Seilscheibe anzuordnen, wodurch sich eine noch kompaktere Bauweise ergibt. Es ergibt sich durch diese Maßnahme ein weiterer überraschender Vorteil, nämlich ein Kraftfluss zur Seilscheibe, der radialer verläuft als dies beim Stand der Technik nach Figur 1 der Fall ist.

Vorzugsweise kann die zentrale Scheibenöffnung - die so wie die Seilscheibe selbst in der Praxis meist zylinderförmig sein wird - als Durchtrittsöffnung ausgebildet sein.

Es können grundsätzlich zwei Ausführungsvarianten der Erfindung unterschieden werden.

Bei der ersten Ausführungsvariante ist der Planetenträger rahmenfest angeordnet und das Hohlrad angetrieben und mit der Seilscheibe verbunden.

Bei der zweiten Ausführungsvariante der Erfindung ist das Hohlrad rahmenfest angeordnet und der Planetenträger mit der Seilscheibe verbunden.

Beim branchenbekannten Stand der Technik erfolgen die Lagerung der Seilscheibe und damit die Einleitung der Seilzugkräfte und die Übertragung des Antriebsmomentes auf die Seilscheibe getrennt voneinander in übereinander angeordneten axialen Bereichen.

Bei einem Ausführungsbeispiel der ersten Ausführungsvariante der Erfindung ist hingegen vorgesehen, dass das Hohlrad einerseits über die Innenverzahnung mit den Planetenrädern zusammen wirkt und so Teil des Antriebssystems ist und andererseits über das Ringlager der Übertragung der Seilzugkräfte in den Tragrahmen dient und so Teil der Lagerung der Seilscheibe ist. Dadurch wird erreicht, dass die Übertragung der Antriebskraft und die Übertragung der Seilzugkräfte im Wesentlichen in einem axialen Bereich erfolgt, wodurch sich eine geringere Bauhöhe ergibt und sich aufgrund des kleineren Hebelarmes auch geringe Belastungsmomente durch die Seilzugkräfte auf die Tragkonstruktion ergeben. Dadurch können im Endeffekt auch die Seilbahnstationen, welche mit einer erfindungsgemäßen Seilförderanlage ausgestattet sind, niedriger gebaut werden.

Bei beiden Ausführungsvarianten der Erfindung kann vorgesehen sein, dass die Antriebsanordnung einer Notfahreinrichtung (Notantrieb) aufweist, wobei das Planetengetriebe voneinander mechanisch entkoppelbare Antriebsteile aufweist. Vorzugsweise ist vorgesehen, dass die entkoppelbaren Antriebsteile in Achsrichtung (axiale Richtung) der Seilscheibe oder in radialer Richtung verschiebbar sind. Die mechanisch entkoppelbaren Antriebsteile können am Planetenträger angeordnet werden. Sie können sich innerhalb oder außerhalb einer Lagerung der Planetenräder befinden. Hierdurch kann die Ausführung des Planetenträgers in einer oder zwei radialen Ebenen erfolgen.

In einer weiteren Ausführungsform beider Varianten der Erfindung ist am Tragrahmen ein zusätzliches Getriebe, vorzugsweise ein Untersetzungsgetriebe, rahmenfest angeordnet. Aufgrund der konstruktiven Ausgestaltung des Tragrahmens zur Lösung der erfindungsgemäßen Aufgabe ist es möglich, dieses zusätzliche Getriebe am Tragrahmen rahmenfest anzuordnen. Dabei kann der Tragrahmen ein Teil dieses zusätzlichen Getriebes, beispielsweise das Getriebegehäuse, darstellen.

Sollte es notwendig sein die Schwungmasse des Antriebssystems zu erhöhen, ist es bei beiden Varianten der Erfindung möglich, diese Zusatzmasse direkt an der Welle des Sonnenrades oder an die Abtriebswelle des Motors anzuordnen.

Der Antrieb der Abtriebswelle, welche das Sonnenrad antreibt, kann bei beiden Varianten der Erfindung entweder unmittelbar motorisch (zum Beispiel Elektromotor, vorzugsweise Langsamläufer oder hydrostatischer Antrieb) oder über ein mechanisches Getriebe erfolgen.

Weitere Vorteile und Einzelheiten der Erfindung ergeben sich anhand der Figuren und der dazugehörigen Figurenbeschreibung. Dabei zeigen:
- Figur 1: eine schematische Schnittdarstellung durch eine Antriebsanordnung nach dem Stand der Technik,
- Figur 2: eine Schittdarstellung durch die erste Ausführungsvariante der Erfindung (Schnittlinie A - A),
- Figur 3: eine Schittdarstellung durch die zweite Ausführungsvariante der Erfindung (Schnittlinie A - A),
- Figur 4: eine Draufsicht auf die Seilscheibe (beide Ausführungsvarianten) mit Schnittlinie A-A,
- Figur 5: eine Seitenansicht eines weiteren Ausführungsbeispiels der Erfindung und
- Figur 6: eine Seitenansicht eines weiteren Ausführungsbeispiels der Erfindung.

In Figur 1 ist der branchenbekannte Stand der Technik in einer sehr schematischen Schnittdarstellung gezeigt.

An einem nicht dargestellten Tragrahmen 1 ist eine Hohlachse 2 angeordnet, welche über Seilscheibenlager 7 der drehbaren Lagerung der Seilscheibe 9 dient, und zwar über den Planetenträger 6. Im Betrieb der Antriebsanordnung erfolgt die Einleitung der Seilzugkräfte von der Seilscheibe 9 über den Planetenträger 6 in die Hohlachse 2 in einem axialen Bereich, welcher durch den Abstand der Seilscheibenlager 7 entlang der Hohlachse 2 vorgegeben ist.

Die Übertragung des Antriebsmoments von der Abtriebswelle 3 einer nicht näher dargestellten weiteren Getriebestufe auf die Seilscheibe 9 erfolgt über ein drehfest mit der Abtriebswelle 3 verbundenes Sonnenrad 4, welches mit wenigstens drei Planetenrädern 5 (nur eines ist in dieser Schnittdarstellung erkennbar) zusammenwirkt. Die Planetenräder 5 sind drehbar am Planetenträger 6 befestigt und wirken mit einer Innenverzahnung des Hohlrades 8 zusammen. Da bei der branchenbekannten Lösung das Hohlrad 8 rahmenfest angeordnet ist, kommt es zu einer Drehung des Planetenträgers 6 und damit der mit dem Planetenträger 6 drehfest verbundenen Seilscheibe 9. Diese Übertragung des Antriebsmomentes erfolgt in einem axialen Bereich, welcher im Wesentlichen durch die axiale Erstreckung des Hohlrades 8 vorgegeben ist.

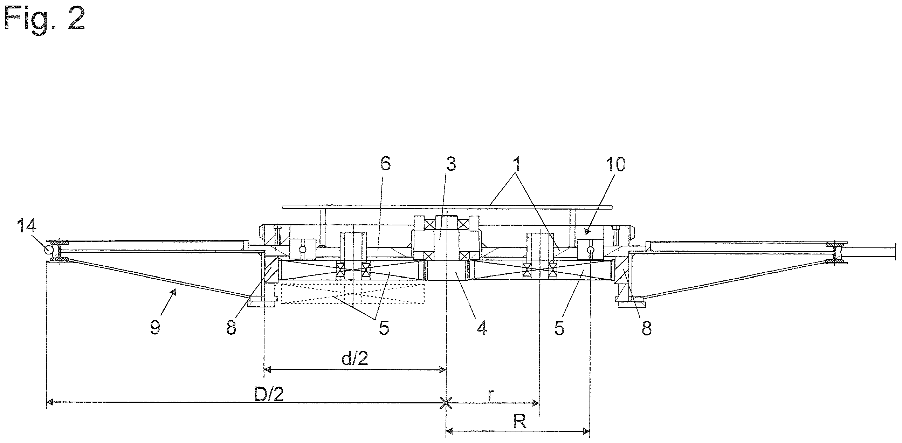

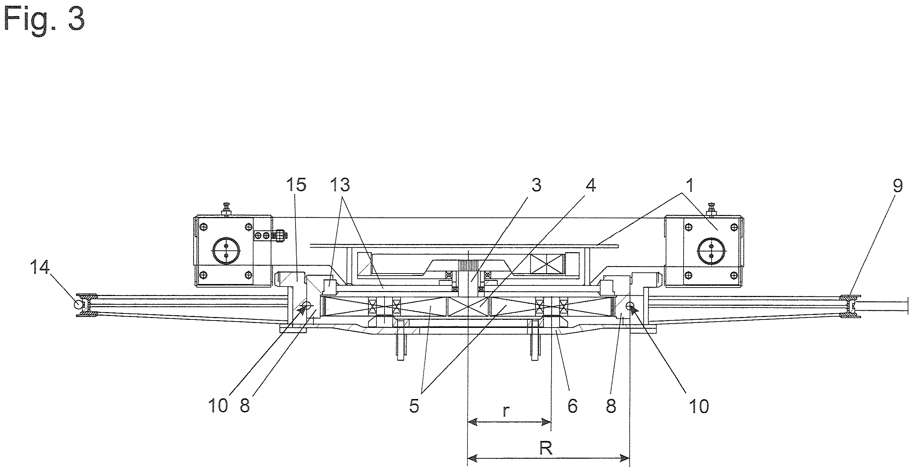

Zwei Ausführungsvarianten der Erfindung sind in den Figuren 2 und 3 gezeigt. Erfindungsgemäß ist bei beiden Varianten vorgesehen, dass die Seilscheibe 9 über wenigstens ein Ringlager 10 am Tragrahmen 1 gelagert ist und dass der Radius R des wenigstens einen Ringlagers 10 größer ist als der radiale Abstand r der Lagerung der Planetenräder 5 vom zentralen Sonnenrad 4.

Da die zweite Ausführungsvariante der Erfindung gemäß Figur 3 eine größere konstruktive Ähnlichkeit mit dem Stand der Technik nach Figur 1 hat, als die erste Ausführungsvariante der Erfindung gemäß Figur 2, wird zunächst die Figur 3 diskutiert.

In Figur 3 ist das Hohlrad 8 drehfest mit der Tragplatte 13 verbunden. Dadurch dreht sich der Planetenträger 6 bei Aktivierung des Sonnenrades 4 um die Drehachse 16.

In Figur 3 ist zwischen Seilscheibe 9 und Tragplatte 13 ein mehrteiliges Ringlager 10 angeordnet. Das Ringlager 10 besteht aus einem Innenkranz, der hier durch das Hohlrad 8 gebildet wird, einem seilscheibenseitigen Außenkranz und einem Kranz von Wälzkörpern (zum Beispiel Kugeln oder Walzen), die zwischen Außenkranz und Innenkranz angeordnet sind. Andere Bauweisen des Ringlagers 10 wären natürlich denkbar, wie zum Beispiel die Anordnung eines zweiten Kranzes aus Wälzkörpern axial über dem ersten Kranz aus Wälzkörpern. Über dieses Ringlager 10 erfolgt im Betrieb die Einleitung der Seilzugkräfte von der Seilscheibe 9 in das Hohlrad 8 und über die Tragplatte 13 in den Tragrahmen 1.

Im Unterschied zum Stand der Technik erfolgt die Einleitung in den Tragrahmen 1 also nicht über eine Hohlachse sondern direkt über das Hohlrad 8.

Da das den Innenkranz des Ringlagers 10 bildende Hohlrad 8 Teil des Planetengetriebes ist, erfolgen somit die Übertragung des Antriebsmomentes und der Seilzugkräfte etwa im selben axialen Bereich. Die daraus resultierende geringe Bauhöhe der Antriebsanordnung sticht im Vergleich zur Figur 1 ins Auge.

Im gezeigten Ausführungsbeispiel ist am Außenkranz des Ringlagers ein Zahnkranz 15 eines Notantriebes ausgebildet. Der Notantrieb wird zum Beispiel im Falle eines Stromausfalles oder eines Getriebebruches aktiviert. Der Planetenträger 6 ist hier zweiteilig ausgeführt. Ein Teil trägt die Planetenräder 5 und der andere Teil dient der Übertragung des Antriebsmoments. Durch Lösen der beiden Teile voneinander kann eine Blockade durch das Getriebe vermieden werden.

Figur 2 zeigt eine Variante, in welcher der Planetenträger 6 rahmenfest angeordnet ist und sich daher bei Aktivierung des Sonnenrades 4 das Hohlrad 8 zu drehen beginnt. Der Planetenträger 6 ist einstückig mit dem Tragrahmen 1 ausgebildet. Zwischen dem Planetenträger 6 bzw. dem Tragrahmen 1 und dem drehfest mit der Seilscheibe 9 verbundenen Hohlrad 8 ist ein Ringlager 10 angeordnet. Der Außenkranz des Ringlagers 10 kann Teil eines Zahnkranzes eines Notantriebes sein.

Bei beiden Ausführungsvarianten der Erfindung kann der Antrieb des Sonnenrades 4 entweder stehend von oben (wie in den Figuren gezeigt) oder hängend von unten erfolgen.

Anders als in Figur 2 gezeigt, könnte der Zahnkranz 15 des Notantriebs so wie in Figur 3 gezeigt, mit dem Außenkranz des Ringlagers 10 einstückig ausgebildet sein. Statt einer einstückigen Ausbildung kann aus fertigungstechnischen Gründen eine axiale Teilung des Außenkranzes des Ringlagers 10 und des Zahnkranzes 15 des Notantriebes vorgesehen sein.

Ein Trennung der Seilscheibe 9 von der Abtriebswelle 3 kann durch ein Absenken der Planetenräder 5 (in Figur 2 schematisch für das linke Planetenrad 5 dargestellt) erfolgen.

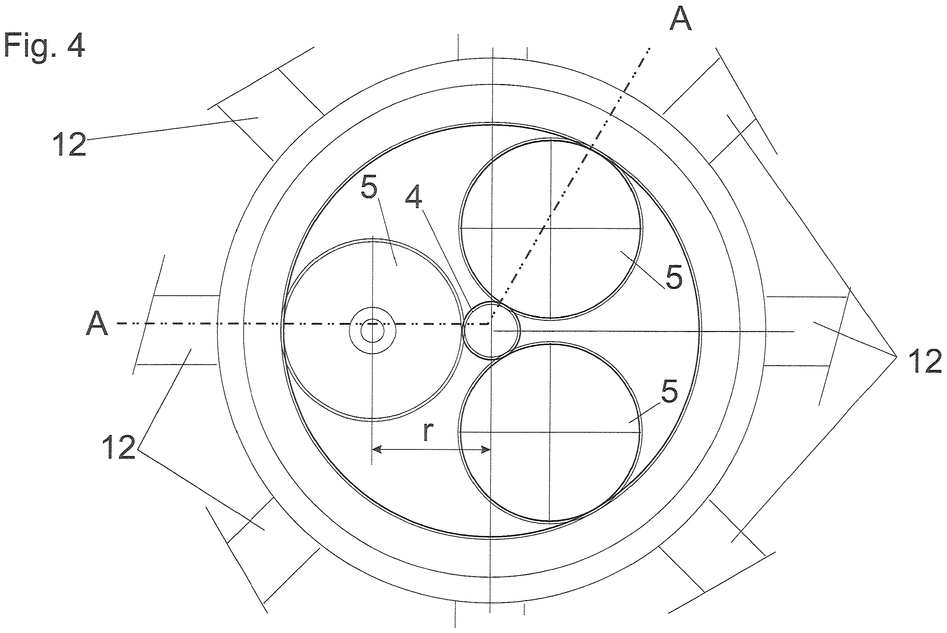

Figur 4 zeigt eine Draufsicht auf die Seilscheibe 9 mit eingezeichneter Schnittlinie A-A.

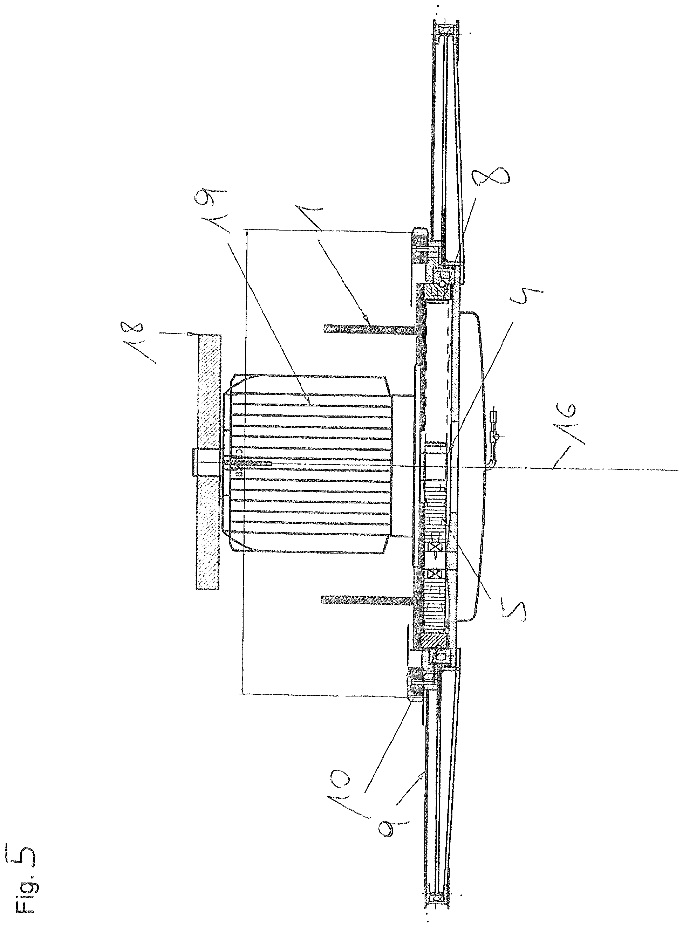

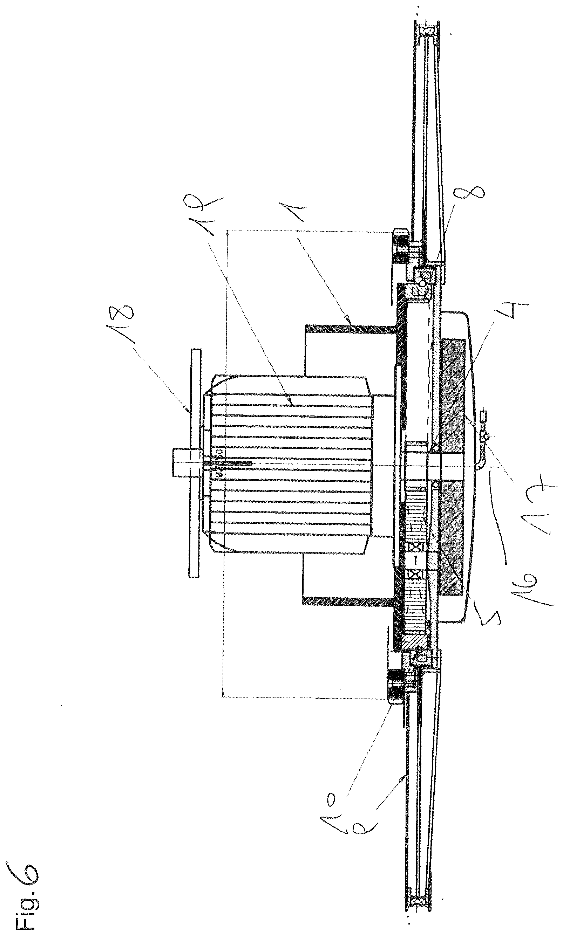

Figur 5 zeigt ein Ausführungsbeispiel, bei welchem die Anordnung einer Bremsscheibe 18, welche hier aufgrund der massiven Ausgestaltung gleichzeitig auch als Schwungrad 17 fungiert. In der Alternative der Figur 6 ist die Bremsscheibe 18 getrennt vom Schwungrad 17 ausgebildet. Gezeigt ist die Anordnung des Schwungrades 17 bzw. der Bremsscheibe 18 für die zweite Ausführungsvariante (drehender Planetenträger 6) gezeigt. Die Anwendung bei der ersten Ausführungsvariante wäre natürlich ebenso möglich.

Bei beiden Ausführungsbeispielen ist eine zentrale Scheibenöffnung 11 mit Öffnungsdurchmesser d vorgesehen.

### Liste der Bezugszeichen:

- 1: Tragrahmen
- 2: Hohlachse
- 3: Abtriebswelle des Motors
- 4: Sonnenrad
- 5: Planetenräder
- 6: Planetenträger
- 7: Seilscheibenlager
- 8: Hohlrad
- 9: Seilscheibe
- 10: Ringlager
- 11: Zentrale Scheibenöffnung
- 12: Streben der Seilscheibe
- 13: Tragplatte
- 14: Seil
- 15: Zahnkranz eines Notantriebes
- 16: Drehachse
- 17: Schwungrad
- 18: Bremsscheibe
- 19: Motor

- D: Außendurchmesser der Seilscheibe
- d: Öffnungsdurchmesser der zentralen Scheibenöffnung
- R: Radius des bzw. der Ringlager(s)
- r: radialer Abstand der Lagerung der Planetenräder vom zentralen Sonnenrad

## Patentansprüche

1. Antriebsanordnung für eine Seilförderanlage, mit:
- einem Tragrahmen (1),
- einem Motor (19),
- einer Seilscheibe (9), die durch den Motor (19) über ein als Planetengetriebe ausgebildetes Untersetzungsgetriebe um eine Drehachse (16) drehbar ist, wobei das Planetengetriebe aufweist:
ein um die Drehachse (16) drehbares, zentral angeordnetes Sonnenrad (4), welches von der Abtriebswelle des Motors (19) oder ggf. eines Zwischengetriebes antreibbar ist,
vom Sonnenrad (4) radial beabstandet gelagerte Planetenräder (5), welche mit dem Sonnenrad (4) zusammen wirken,
und ein Hohlrad (8), wobei das Hohlrad (8) über einen eine Innenverzahnung aufweisenden Teil mit den Planetenrädern (5) zusammen wirkt,
- wobei die Seilscheibe (9) eine zentrale Scheibenöffnung (11) aufweist, in welcher das Untersetzungsgetriebe angeordnet ist,
**dadurch gekennzeichnet, dass**
die Seilscheibe (9) über wenigstens ein Ringlager (10) am Tragrahmen (1) gelagert ist und dass der Radius (R) des wenigstens einen Ringlagers (10) größer ist als der radiale Abstand (r) der Lagerung der Planetenräder (5) von der Drehachse (16).

2. Antriebsanordnung nach Anspruch 1 wobei die Seilscheibe (9) einen Außendurchmesser (D) aufweist, an welchem im Betrieb der Antriebsanordnung das Seil abläuft, **dadurch gekennzeichnet, dass** der Öffnungsdurchmesser (d) der zentralen Scheibenöffnung (11) wenigstens ein Drittel des Außendurchmessers (D) der Seilscheibe (9) beträgt.

3. Antriebsanordnung nach Anspruch 2, **dadurch gekennzeichnet, dass** der Öffnungsdurchmesser (d) wenigstens gleich der Hälfte des Außendurchmessers (D) der Seilscheibe (9) ist.

4. Antriebsanordnung nach Anspruch 2 oder 3, **dadurch gekennzeichnet, dass** das Untersetzungsgetriebe vollständig in der zentralen Scheibenöffnung (11) angeordnet ist.

5. Antriebsanordnung nach wenigstens einem der Ansprüche 1 bis 4, **dadurch gekennzeichnet, dass** der Planetenträger (6) rahmenfest angeordnet ist und das Hohlrad (8) angetrieben und mit der Seilscheibe (11) drehfest verbunden ist.

6. Antriebsanordnung nach Anspruch 5, **dadurch gekennzeichnet, dass** der Planetenträger (6) direkt am Tragrahmen (1) befestigt ist.

7. Antriebsanordnung nach Anspruch 5 oder 6, **dadurch gekennzeichnet, dass** die Seilscheibe (9) mit dem Tragrahmen (1) durch das Hohlrad (8) verbunden ist und das Hohlrad (8) am Tragrahmen (1) drehbar gelagert ist und im Betrieb der Antriebsanordnung Seilzugkräfte von der Seilscheibe (9) über das Hohlrad (8) in den Tragrahmen (1) eingeleitet werden

8. Antriebsanordnung nach wenigstens einem der Ansprüche 1 bis 4, **dadurch gekennzeichnet, dass** das Hohlrad (8) rahmenfest angeordnet ist und der Planetenträger (6) mit der Seilscheibe (11) drehfest verbunden ist.

9. Antriebsanordnung nach Anspruch 8, **dadurch gekennzeichnet, dass** das Hohlrad (8) direkt am Tragrahmen (1) befestigt ist.

10. Antriebsanordnung nach einem der Ansprüche 1 bis 9, mit einem Notantrieb, **dadurch gekennzeichnet, dass** das Planetengetriebe voneinander mechanisch entkoppelbare Antriebsteile (5,8; 6,7) aufweist.

11. Antriebsanordnung nach Anspruch 10, **dadurch gekennzeichnet, dass** die entkoppelbaren Antriebsteile (5,8; 6,7) in Achsrichtung der Seilscheibe (11) oder in radialer Richtung verschiebbar sind.

12. Antriebsanordnung nach einem der Ansprüche 1 bis 11, **dadurch gekennzeichnet, dass** am Tragrahmen (1) ein zusätzliches Getriebe, vorzugweise ein Untersetzungsgetriebe, rahmenfest angeordnet ist.

13. Antriebsanordnung nach einem der Ansprüche 1 bis 12, **dadurch gekennzeichnet, dass** zur Erhöhung der Schwungmasse der Antriebsanordnung eine Zusatzmasse direkt an der Abtriebswelle (3) des Motors oder an der Welle des Sonnenrades (4) angeordnet ist.

14. Seilförderanlage mit einer Antriebsanordnung nach einem der Ansprüche 1 bis 13.

## Claims

1. A drive arrangement for a cable conveyor installation comprising:
- a support frame (1),
- a motor (19),
- a pulley (9) rotatable about an axis of rotation (16) by the motor (19) by way of a reduction transmission in the form of a planetary transmission, wherein the planetary transmission comprises:
a centrally arranged sun gear (4) which is rotatable about the axis of rotation (16) and which is drivable by the output shaft of the motor (19) or possibly an intermediate transmission,
planetary gears (5) which are mounted radially spaced from the sun gear (4) and which cooperate with the sun gear (4), and
a ring gear (8), wherein the ring gear (8) cooperates with the planetary gears (5) by way of a member having an internal tooth arrangement,
- wherein the pulley (9) has a central pulley opening (11) in which the reduction transmission is arranged,
**characterised in that**
the pulley (9) is mounted to the support frame (1) by way of at least one annular bearing (10) and that the radius (R) of the at least one annular bearing (10) is greater than the radial spacing (r) of the bearing means of the planetary gears (5) from the axis of rotation (16).

2. A drive arrangement according to claim 1 wherein the pulley (9) is of an outside diameter (2) at which the cable runs in operation of the drive arrangement, **characterised in that** the diameter (d) of the central pulley opening (11) is at least a third of the outside diameter (D) of the pulley (9).

3. A drive arrangement according to claim 2 **characterised in that** the opening diameter (d) is at least equal to half the outside diameter (D) of the pulley (9).

4. A drive arrangement according to claim 2 or claim 3 **characterised in that** the reduction transmission is arranged completely in the central pulley opening (11).

5. A drive arrangement according to at least one of claims 1 to 4 **characterised in that** the planetary carrier (6) is arranged fixedly with respect to the frame and the ring gear (8) is driven and is non-rotatably connected to the pulley (11).

6. A drive arrangement according to claim 5 **characterised in that** the planetary carrier (6) is fixed directly to the support frame (1).

7. A drive arrangement according to claim 5 or claim 6 **characterised in that** the pulley (9) is connected to the support frame (1) by the ring gear (8) and the ring gear (8) is mounted rotatably to the support frame (1) and in operation of the drive arrangement cable tensile forces are applied by the pulley (9) to the support frame (1) by way of the ring gear (8).

8. A drive arrangement according to one of claims 1 to 4 **characterised in that** the ring gear (8) is arranged fixedly with respect to the frame and the planetary carrier (6) is non-rotatably connected to the pulley (11).

9. A drive arrangement according to claim 8 **characterised in that** the ring gear (8) is fixed directly to the support frame (1).

10. A drive arrangement according to one of claims 1 to 9 having an emergency drive, **characterised in that** the planetary transmission has drive portions (5, 8; 6, 7) which can be mechanically uncoupled from each other.

11. A drive arrangement according to claim 10 **characterised in that** the uncoupleable drive portions (5, 8; 6, 7) are displaceable in the axial direction of the pulley (11) or in a radial direction.

12. A drive arrangement according to one of claims 1 to 11 **characterised in that** an additional transmission, preferably a reduction transmission, is arranged fixedly on the support frame (1).

13. A drive arrangement according to one of claims 1 to 12 **characterised in that** to increase the flywheel mass of the drive arrangement an additional mass is arranged directly at the output shaft (3) of the motor or at the shaft of the sun gear (4).

14. A cable conveyor installation comprising a drive arrangement according to one of claims 1 to 13.

## Revendications

1. Dispositif d'entraînement pour une installation de convoyage par câble, avec :
- un châssis porteur (1),
- un moteur (19),
- une poulie (9) qui peut être mise en rotation par le moteur (19), par l'intermédiaire d'un engrenage réducteur conçu comme un engrenage planétaire, autour d'un axe de rotation (16) l'engrenage planétaire comprenant:
une roue solaire (4) disposé au centre, tournant autour de l'axe de rotation (16), qui peut être entraînée par l'arbre de sortie du moteur (19) ou le cas échéant d'un engrenage intermédiaire,
des roues planétaires (5) logées radialement de manière distante de la roue solaire (4), qui interagissent avec la roue solaire (4)
et une couronne (8), la couronne (8) interagissant avec les roues planétaires (5) par l'intermédiaire d'une partie comprenant une denture interne,
- la poulie (9) comprenant une ouverture centrale (11) dans laquelle est disposé l'engrenage réducteur,
**caractérisé en ce que**
la poulie (9) est logée, par l'intermédiaire d'au moins un palier annulaire (10), sur le châssis porteur (1) et **en ce que** le rayon (R) de l'au moins un palier annulaire (10) est supérieur à la distance radiale (r) entre les paliers des roues planétaires (5) et l'axe de rotation (16).

2. Dispositif d'entraînement selon la revendication 1, la poulie (9) présentant un diamètre extérieur (D), sur lequel le câble se déroule lors du fonctionnement du dispositif d'entraînement, **caractérisé en ce que** le diamètre d'ouverture (d) de l'ouverture centrale (11) représente au moins un tiers du diamètre extérieur (D) de la poulie (9).

3. Dispositif d'entraînement selon la revendication 2, **caractérisé en ce que** le diamètre d'ouverture (d) est au moins égal à la moitié du diamètre extérieur (D) de la poulie (9).

4. Dispositif d'entraînement selon la revendication 2 ou 3, **caractérisé en ce que** l'engrenage réducteur est disposé entièrement dans l'ouverture centrale (11).

5. Dispositif d'entraînement selon au moins l'une des revendications 1 à 4, **caractérisé en ce que** le support planétaire (6) est disposé de manière solidaire avec le châssis et la couronne (8) est entraînée et reliée de manière solidaire en rotation avec la poulie (11).

6. Dispositif d'entraînement selon la revendication 5, **caractérisé en ce que** le support planétaire (6) est fixé directement au châssis porteur (1).

7. Dispositif d'entraînement selon la revendication 5 ou 6, **caractérisé en ce que** la poulie (9) est reliée avec le châssis porteur (1) par l'intermédiaire de la couronne (8) et la couronne (8) est logé de manière rotative sur le châssis porteur (1) et, lors du fonctionnement du dispositif d'entraînement, les forces de traction du câble sont appliquées de la poulie (9), par l'intermédiaire de la couronne (8), vers le châssis porteur (1).

8. Dispositif d'entraînement selon au moins l'une des revendications 1 à 4, **caractérisé en ce que** la couronne (8) est disposée de manière solidaire avec le châssis, et le support planétaire (6) est relié de manière solidaire en rotation avec la poulie (11).

9. Dispositif d'entraînement selon la revendication 8, **caractérisé en ce que** la couronne (8) est fixée directement sur le châssis porteur (1).

10. Dispositif d'entraînement selon l'une des revendications 1 à 9, **caractérisé en ce que** l'engrenage planétaire comprend des pièces d'entraînement (5, 8 ; 6, 7) pouvant être découplées mécaniquement entre elles.

11. Dispositif d'entraînement selon la revendication 10, **caractérisé en ce que** les pièces d'entraînement (5, 8 ; 6, 7) pouvant être découplées sont mobiles dans la direction de l'axe de la poulie (11) ou dans la direction radiale.

12. Dispositif d'entraînement selon l'une des revendications 1 à 11, **caractérisé en ce que**, sur le châssis porteur (1), est disposé, de manière solidaire avec le châssis, un engrenage supplémentaire, plus particulièrement un engrenage réducteur.

13. Dispositif d'entraînement selon l'une des revendications 1 à 12, **caractérisé en ce que**, pour l'augmentation de la masse oscillante du dispositif d'entraînement, une masse supplémentaire est disposée directement sur l'arbre de sortie (3) du moteur ou sur l'arbre de la roue solaire (4).

14. Installation de convoyage par câble avec un dispositif d'entraînement selon l'une des revendications 1 à 13.
